# EUROPÄISCHE PATENTSCHRIFT

(11) **EP 2 913 495 B1**
(45) Veröffentlichungstag und Bekanntmachung des Hinweises auf die Patenterteilung: **09.08.2017**
(21) Anmeldenummer: 14197087.1
(22) Anmeldetag: 10.12.2014
(51) Int. Cl.: F01N 3/18, F01N 3/20, F01N 3/28, F01N 13/00, B23K 31/02

(54) **Verfahren zum Herstellen einer Abgasnachbehandlungseinrichtung und entsprechende Abgasnachbehandlungseinrichtung**
Method for manufacturing an exhaust gas treatment device and corresponding exhaust gas treatment device
Procédé de fabrication d'un dispositif de post-traitement de gaz d'échappement et dispositif de post-traitement de gaz d'échappement correspondant

(30) Priorität: 26.02.2014 DE 102014203495
(43) Veröffentlichungstag der Anmeldung: 02.09.2015
(73) Patentinhaber: Eberspächer Exhaust Technology GmbH & Co. KG, 66539 Neunkirchen (DE)
(72) Erfinder: Kast, Peter, 73732 Esslingen (DE)
(74) Vertreter: BRP Renaud & Partner mbB Rechtsanwälte Patentanwälte Steuerberater

(56) Entgegenhaltungen:
- EP-A2- 2 101 046
- FR-A1- 2 244 909
- JP-A- H06 280 551
- US-A- 4 347 219
- US-A- 4 581 206
- US-A- 5 555 621

## Beschreibung

Die vorliegende Erfindung betrifft ein Verfahren zum Herstellen einer Abgasnachbehandlungseinrichtung. Die Erfindung betrifft außerdem eine nach diesem Verfahren hergestellte Abgasnachbehandlungseinrichtung.

Abgasnachbehandlungseinrichtungen arbeiten häufig mit keramischen Substratkörpern, wie zum Beispiel Katalysatoren und Partikelfilter. Bei Katalysatoren können die Substratkörper je nach Reinigungsauftrag katalytisch aktiv beschichtet sein, bspw. um einen Oxydationskatalysator oder einen DeNox-Katalysator oder einen Drei-Wege-Katalysator oder einen Hydrolyse-Katalysator oder einen Ammoniak-Sperr-Katalysator zu bilden. Die Substratkörper sind in der Regel aus einem Stück materialeinheitlich, also monolithisch hergestellt, so dass sie jeweils einen Monolithen bilden. Je nach Reinigungsauftrag können auch zwei oder mehr keramische Substratkörper hintereinander durchströmt werden. Ferner kann es zur Effizienzsteigerung möglich sein, zwei oder mehr Substratkörper hintereinander anzuordnen. Auch bei einem Partikelfilter können zwei oder mehr Substratkörper hintereinander angeordnet sein, die sich bspw. durch unterschiedliche Porengrößen voneinander unterscheiden. Auch können Substratkörper mit verschiedenen Reinigungsaufträgen, also insbesondere mit unterschiedlichen katalytischen Beschichtungen, in einem gemeinsamen Gehäuse hintereinander angeordnet sein.

Zur Realisierung einer kompakten Bauweise kann eine solche Abgasnachbehandlungseinrichtung ein rohrförmiges Gehäuse aufweisen, in dem entweder genau ein keramischer Substratkörper zur Abgasnachbehandlung angeordnet ist oder zumindest zwei keramische Substratkörper zur Abgasnachbehandlung hintereinander angeordnet sind. Üblicherweise erfolgt eine Lagerung derartiger keramischer Substratkörper in einem metallischen Gehäuse mit Hilfe von Lagermatten. Hierbei werden die Lagermatten radial komprimiert. Das Einsetzen der Substratkörper mit Lagermatte in das Gehäuse wird üblicherweise als "Canning" bezeichnet. Von Interesse ist hierbei ein axiales Canning, bei dem der jeweilige Substratkörper mit der Lagermatte axial in das rohrförmige Gehäuse eingeführt wird.

Zur axialen Lagesicherung des Substratkörpers innerhalb des Gehäuses ist es grundsätzlich möglich, am Gehäuse eine Axialabstützung vorzusehen, an der sich der jeweilige Substratkörper axial abstützen kann. Zweckmäßig ist eine derartige Axialabstützung an der Austrittsseite oder Abströmseite des jeweiligen Substratkörpers angeordnet. Sofern bei einer Abgasnachbehandlungseinrichtung wenigstens zwei Substratkörper im Gehäuse hintereinander angeordnet sind, besteht der Wunsch, den stromauf angeordneten Substratkörper mittels einer derartigen Axialabstützung am Gehäuse abzustützen, um eine Axialverschiebung des zuerst durchströmten Substrats, die zu einer Kollision mit dem stromab angeordneten Substratkörper und somit zu einer Beschädigungsgefahr für beide Substrate führen kann, zu verhindern. Hierdurch erschwert sich die Montage bzw. die Herstellung der Abgasnachbehandlungseinrichtung. Beispielsweise muss bei einem Gehäuse, das eine solche Axialabstützung enthält, der stromauf liegende Substratkörper von einer Einlassseite des Gehäuses in das Gehäuse eingesetzt werden, während der stromab liegende Substratkörper durch eine Auslassseite des Gehäuses in das Gehäuse eingesetzt werden muss, damit anschließend die Axialabstützung axial zwischen den beiden Substratkörpern angeordnet ist. Je nach Canning-Verfahren muss hierzu das Gehäuse in einer entsprechenden Canning-Einrichtung gewendet werden. Bei einer Abgasnachbehandlungseinrichtung, die nur einen einzigen Substratkörper enthält, ist ebenfalls eine Axialabstützung zum Schutz vor einer Kollision des Substratkörpers mit dem Gehäuse erwünscht, wobei sich bei der Herstellung ähnliche Probleme zeigen.

Aus der US 4,347,219 A ist ein Verfahren zum Herstellen einer Abgasnachbehandlungseinrichtung bekannt, wobei ein Substratkörper in ein Gehäuse eingeführt und mit Hilfe einer Lagermatte umhüllt sowie radial vorgespannt wird. Zudem wird ein von einem Tragring gehaltenes Stützelement in das Gehäuse eingeführt, gegen den Substratkörper vorgespannt und am Gehäuse verschweißt.

Die US 4,581,206 A1 zeigt eine Abgasnachbehandlungseinrichtung mit einem Gehäuse und zwei darin angeordneten Substratkörpem, die axial in das Gehäuse eingeführt und mit Hilfe von Axialelementen axial im Gehäuse gehalten sind. Zwischen den Substratkörpern ist dabei eine axial verschiebbare Mittelplatte angeordnet.

In der EP 2 101 046 A2 ist eine Abgasnachbehandlungseinrichtung mit einem Gehäuse gezeigt, in dem ein Substratkörper angeordnet und axial vom Gehäuse beabstandet ist.

Die vorliegende Erfindung beschäftigt sich mit dem Problem, für eine derartige Abgasnachbehandlungseinrichtung bzw. für ein zugehöriges Herstellungsverfahren eine verbesserte oder zumindest eine andere Ausführungsform anzugeben, die sich insbesondere durch eine reduzierte Beschädigungsgefahr für den jeweiligen Substratkörper sowie optional durch eine vereinfachte Herstellung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Canning so durchzuführen, dass zunächst ein Substratkörper mit einer Lagermatte in das Gehäuse eingeführt wird, dass anschließend eine Axialabstützung in das Gehäuse eingeführt und in vorbestimmter Weise zur axialen Abstützung des ersten Substratkörpers im Gehäuse positioniert wird und dass schließlich die Axialabstützung in der gewünschten Position und bei gewünschter axialer Vorspannung zwischen Substratkörper und Axialabstützung am Gehäuse fixiert wird. Hierdurch wird die axiale Positionierung des Substratkörpers in einer vorbestimmten Relativlage im Gehäuse verbessert und die Gefahr einer Verschiebung des Substratkörpers im Betrieb der Abgasnachbehandlungseinrichtung reduziert. Da schon eine solche Axialverschiebung zwischen Substratkörper und Gehäuse die Gefahr einer Beschädigung des Substratkörpers mit sich bringt, kann diese vorgespannte Positionierung und Fixierung die Beschädigungsgefahr für den Substratkörper reduzieren.

Erfindungsgemäß sind zumindest zwei Substratkörper vorgesehen, wobei nach dem Einsetzen eines ersten Substratkörpers mit einer ersten Lagermatte und nach dem Einsetzen, Positionieren und Fixieren der Axialabstützung ein zweiter Substratkörper mit zweiter Lagermatte in das Gehäuse eingeführt wird, derart, dass anschließend die Axialabstützung axial zwischen dem ersten Substratkörper und dem zweiten Substratkörper angeordnet ist. Durch diese Bauweise ist es insbesondere möglich, die drei genannten Komponenten, nämlich die beiden Substratkörper und die Axialabstützung durch dieselbe Axialöffnung des Gehäuses einzuführen, so dass insbesondere ein Wenden des Gehäuses während des Canning-Prozesses vermieden werden kann.

Ferner kann optional vorgesehen sein, auch für den zweiten, und insbesondere auch für jeden weiteren Substratkörper, eine solche Axialsicherung vorzusehen, die positioniert und unter der jeweils gewünschten Vorspannung am Gehäuse fixiert wird. Dabei ist bei unterschiedlichen Substratköpern die Einstellung unterschiedlicher axialer Vorspannungen denkbar.

Bevorzugt erfolgt die Montage derart, dass der jeweilige Substratkörper axial nur einseitig, nämlich ausschließlich austrittsseitig bzw. abströmseitig an einer solchen Axialsicherung axial abgestützt ist, und zwar mit der jeweils vorbestimmten axialen Vorspannung.

Die jeweilige Axialabstützung ist vorzugsweise mittels eines Tragrings und eines vom Tragring gehaltenen, ringförmigen Stützelements gebildet. Vorzugsweise kann die Axialabstützung im Gehäuse so positioniert werden, dass sie über das Stützelement eine vorbestimmte Axialkraft auf den zuvor in das Gehäuse eingesetzten ersten Substratkörper überträgt. Beispielsweise kann hierzu beim Einsetzen der Axialabstützung die beim Andrücken der Axialabstützung gegen den ersten Substratkörper auftretenden Axialkraft gemessen und auf einen vorbestimmten Wert eingestellt werden. Besonders vorteilhaft ist dann eine Weiterbildung des Verfahrens, bei dem die Axialabstützung bei dieser axial vorgespannten Positionierung am Gehäuse fixiert wird. Beispielsweise kann hierzu der Tragring mit dem Gehäuse verschweißt werden. Durch diese Maßnahme lässt sich die eingestellte, vorbestimmte Axialkraft zwischen axialer Abstützung und erstem Substratkörper quasi einfrieren. Hierdurch wird eine axial vorgespannte Montage des ersten Substratkörpers an der Axialabstützung realisiert, obwohl die Axialabstützung erst nach dem ersten Substratkörper in das Gehäuse eingesetzt wird. Eine axial vorgespannte Montage ist vorteilhaft, da dadurch die Gefahr einer Axialverschiebung des stromaufliegenden Substrats reduziert ist.

Die hierzu erforderliche Canning-Einrichtung umfasst somit eine Positioniereinrichtung, mit deren Hilfe die Axialabstützung in das Gehäuse einbringbar und mit der vorbestimmten Axialkraft am ersten Substrat abstützbar ist. Hierzu kann die Positioniereinrichtung mit einer Axialkraftmesseinrichtung ausgestattet sein. Ferner ist diese Positioniereinrichtung zweckmäßig so ausgestaltet, dass sie die Axialabstützung auch während des jeweiligen Schweißvorgangs mit der gewünschten Vorspannung relativ zum Gehäuse positionieren kann.

Entsprechend einer vorteilhaften Weiterbildung des Verfahrens kann der Tragring vor dem Verschweißen radial gegen das Gehäuse angedrückt und in diesem angedrückten Zustand mit dem Gehäuse verschweißt werden. Durch diese Maßnahme wird der Tragring in der Radialrichtung quasi spiel- und spaltfrei am Gehäuse fixiert, wodurch eines besonders effiziente und haltbare Schweißverbindung realisierbar ist. Die zugehörige Positioniereinrichtung ist dann insbesondere zum Aufweiten des Tragrings ausgestaltet, so dass sie den Tragring für den Schweißvorgang radial gegen das Gehäuse andrücken kann.

Gemäß einer Weiterbildung kann der Tragring in der Umfangsrichtung eine Unterbrechung aufweisen, so dass er zum radialen Andrücken gegen das Gehäuse hinsichtlich seines Durchmessers elastisch verformbar ist. Der in der Umfangsrichtung einfach unterbrochene Tragring vereinfacht das radiale Andrücken des Tragrings an das Gehäuse. Während der Tragring in der Umfangsrichtung unterbrochen ist, kann das Stützelement in der Umfangsrichtung geschlossen bzw. unterbrechungsfrei ausgestaltet sein. Das Stützelement besitzt für die axiale Abstützung des ersten Substratkörpers eine gewisse axiale Elastizität. Die axiale Elastizität kann dabei mit einer ausreichenden Elastizität in der Umfangsrichtung einhergehen, so dass das Stützelement der Aufweitung des Tragrings ohne weiteres elastisch folgen kann.

Gemäß einer anderen Ausführungsform kann der Tragring einen das Stützelement haltenden Haltebereich und einen zum Verschweißen mit dem Gehäuse vorgesehenen Fixierbereich aufweisen. Der Fixierbereich steht zweckmäßig axial über den Haltebereich und das Stützelement über. Beim Positionieren der Axialabstützung im Gehäuse wird der Fixierbereich in einen Radialspalt eingeführt, der radial zwischen dem Gehäuse und dem ersten Substratkörper ausgebildet ist, wobei in diesem Radialspalt der Fixierbereich mit dem Gehäuse verschweißt wird. Die jeweilige Schweißverbindung ist dadurch axial versetzt zum Stützelement. Durch diese Maßnahme ergeben sich innerhalb der Axialabstützung Hebelarme, welche eine bei der Axialkraftübertragung entstehende Biegebelastung der jeweiligen Schweißverbindung reduzieren, so dass die jeweilige Schweißverbindung im Wesentlichen nur Scherkräfte, also parallel zur Längsmittelachse des Gehäuses verlaufende Zugkräfte übertragen muss. Hierdurch erhält die jeweilige Schweißverbindung eine besonders hohe Dauerhaltbarkeit.

Entsprechend einer vorteilhaften Weiterbildung kann ein der Axialabstützung zugewandter axialer Rand der ersten Lagermatte gegenüber einer der Axialabstützung zugewandten axialen Stirnseite des ersten Substratkörpers axial versetzt angeordnet sein, so dass besagter Rand der ersten Lagermatte den Radialspalt, in den der vorgenannte Fixierbereich axial eingreift, axial begrenzt. Durch diesen axialen Versatz zwischen erster Lagermatte und erstem Substratkörper kann der Fixierbereich des Tragrings ohne Beschädigung der Lagermatte in den Radialspalt eingeführt werden.

Bei einer anderen Ausführungsform kann das Verschweißen zum Fixieren der Axialabstützung am Gehäuse von einer Außenseite des Gehäuses, radial durch das Gehäuse hindurch durchgeführt werden. Hierdurch vereinfacht sich die Herstellung, da die Axialabstützung mit Hilfe der vorgenannten Positioniereinrichtung an einer Innenseite des Gehäuses auf gewünschte Weise positioniert werden kann, während die Fixierung der Axialabstützung an der Außenseite mittels einer entsprechenden Schweißeinrichtung erfolgt.

Beispielsweise kann das Verschweißen der Axialabstützung am Gehäuse als Laser-Wobbel-Schweißen durchgeführt werden. Alternativ kann auch ein Punktschweißverfahren zum Einsatz kommen. Beim Laser-Wobbel-Schweißen werden mittels Laserschweißtechnik diskrete, also in ihrer Längsrichtung begrenzte Schweißnähte erzeugt. Die Längsrichtung der Schweißnähte erstreckt sich zweckmäßig in der Umfangsrichtung des Gehäuses. Dementsprechend werden somit mehrere, in der Umfangsrichtung verteilt und zueinander beabstandet angeordnete Schweißnähte erzeugt, um die Axialabstützung am Gehäuse zu fixieren.

Entsprechend einer vorteilhaften Weiterbildung kann das Gehäuse im Bereich der Axialabstützung ungelocht sein und im ungelochten Zustand mit dem Tragring verschweißt werden. Hierdurch wird die Fixierung der Abstützung am Gehäuse vereinfacht, da vorab keine Öffnungen im Gehäuse angeordnet werden müssen, um bspw. Schweißstellen zu erzeugen. Die Verschweißung erfolgt durch das Gehäuse bzw. durch den Werkstoff des Gehäuses hindurch.

Gemäß einer anderen vorteilhaften Ausführungsform kann als Stützelement ein Drahtgestrick verwendet werden, das beim axialen Vorspannen der axialen Abstützung elastisch verformt wird. Ein derartiges Drahtgestrick zeichnet sich durch eine dauerhafte Elastizität auch bei hohen Temperaturen aus.

Gemäß einer anderen vorteilhaften Ausführungsform kann der Tragring mit einem U-Profil ausgestattet sein, das einen Außenschenkel und einen Innenschenkel zum radialen Positionieren des Stützelements sowie eine den Außenschenkel mit dem Innenschenkel verbindende Basis zum axialen Positionieren des Stützelements aufweist. Ein das U-Profil aufweisender Querschnitt des Tragrings liegt dabei in einer die Längsmittelachse des Gehäuses enthaltenden Schnittebene. Das U-Profil erstreckt sich in der Umfangsrichtung des Tragrings. Durch das U-Profil ist das Stützelement sicher am Tragring positioniert.

Bevorzugt ist eine Ausführungsform, bei welcher der Außenschenkel axial über den Innenschenkel und vorzugsweise auch über das Stützelement übersteht und mit dem Gehäuse verschweißt wird. Insbesondere bildet der Außenschenkel dann den vorstehend genannten Fixierbereich des Tragrings. Die Schweißverbindung erfolgt somit axial versetzt zum Stützelement.

Axial zwischen dem ersten Substratkörper und dem zweiten Substratkörper ist ein Axialspalt ausgebildet, in dem der Tragring das Stützelement positioniert. Gemäß einer vorteilhaften Ausführungsform kann eine axiale Abmessung der Axialabstützung innerhalb des Axialspalts kleiner sein als eine axiale Spaltbreite des Axialspalts. Hierdurch wird erreicht, dass der zweite Substratkörper von der Axialabstützung, insbesondere vom Tragring der Axialabstützung, axial beabstandet ist. Dabei kann die Spaltbreite maximal 100%, vorzugsweise maximal 50%, größer sein als die axiale Abmessung der Axialabstützung innerhalb des Axialspalts.

Gemäß einer anderen vorteilhaften Ausführungsform können der erste Substratkörper, die Axialabstützung und der zweite Substratkörper durch dieselbe Axialöffnung des Gehäuses in das Gehäuse eingeführt werden. Hierdurch vereinfacht sich der Canning-Vorgang, da insbesondere ein Wenden des Gehäuses entfällt.

Eine erfindungsgemäße Abgasnachbehandlungseinrichtung charakterisiert sich dadurch, dass sie gemäß dem vorstehend beschriebenen Verfahren hergestellt ist. Insbesondere kann eine derartige Abgasnachbehandlungseinrichtung daran erkennbar sein, dass auch bei unbenutzter Abgasnachbehandlungseinrichtung bereits eine axiale Vorspannung zwischen der Axialabstützung und dem jeweiligen Substratkörper vorliegt. Ferner kann eine erfindungsgemäße Abgasnachbehandlungseinrichtung, die zwei oder mehr Substratkörper enthält, daran erkennbar sein, dass nur eine der beiden Axialöffnungen dafür geeignet ist, die Substratkörper und die Axialabstützung einzuführen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

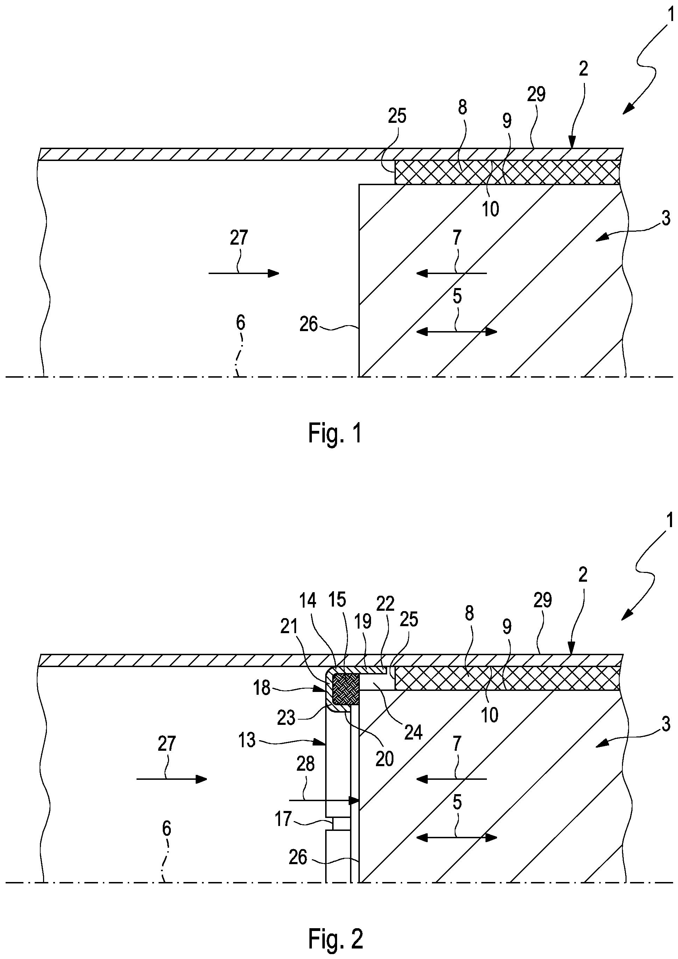

- Fig. 1 bis 4: jeweils einen Axialschnitt einer Abgasnachbehandlungseinrichtung bei verschiedenen Schritten eines Herstellungsverfahrens.

Entsprechend den Fig. 1 bis 4 umfasst eine Abgasnachbehandlungseinrichtung 1, bei der es sich bspw. um einen Katalysator oder um ein Partikelfilter handeln kann, ein rohrförmiges Gehäuse 2, in dem zumindest zwei keramische Substratkörper, nämlich ein erster Substratkörper 3 und ein zweiter Substratkörper 4 angeordnet sind. Die beiden Substratkörper 3, 4 sind dabei bezüglich einer Axialrichtung 5, die in den Figuren durch einen Doppelpfeil angedeutet ist, hintereinander angeordnet. Die Axialrichtung 5 erstreckt sich dabei parallel zu einer Längsmittelachse 6 des Gehäuses 2. Die Abgasnachbehandlungseinrichtung 1 ist für einen Einbau in eine hier nicht gezeigte Abgasanlage einer Brennkraftmaschine, vorzugsweise eines Kraftfahrzeugs, vorgesehen. Im Betrieb der Abgasanlage bzw. der Abgasnachbehandlungseinrichtung 1 stellt sich im Gehäuse 2 eine Abgasströmung ein, die in einer Strömungsrichtung 7 durch das Gehäuse 2 strömt. Die Strömungsrichtung 7 ist dabei in den Figuren durch einen Pfeil angedeutet. Bezüglich dieser Strömungsrichtung 7 ist der erste Substratkörper 3 stromauf des zweiten Substratkörpers 4 angeordnet.

Der erste Substratkörper 3 ist im Gehäuse 2 mittels einer ersten Lagermatte 8 gelagert, die hierzu den ersten Substratkörper 3 in der Umfangsrichtung umhüllt und radial zwischen dem ersten Substratkörper 3 und dem Gehäuse 2 vorgespannt bzw. verpresst ist. Dabei kann die erste Lagermatte 8 unmittelbar an einer Außenseite 9 des ersten Substratkörpers 3 und unmittelbar an einer Innenseite 10 des Gehäuses 2 anliegen. Der zweite Substratkörper 4 ist mit einer zweiten Lagermatte 11 im Gehäuse 2 gelagert. Dabei umhüllt die zweite Lagermatte 11 den zweiten Substratkörper 4 in der Umfangsrichtung und ist radial zwischen dem zweiten Substratkörper 4 und dem Gehäuse 2 verpresst bzw. vorgespannt. Dabei kann die zweite Lagermatte 11 unmittelbar an einer Außenseite 12 des zweiten Substratkörpers 4 und unmittelbar an der Innenseite 10 des Gehäuses 2 anliegen.

Die Abgasnachbehandlungseinrichtung 1 enthält im Gehäuse 2 außerdem eine Axialabstützung 13, die einen Tragring 14 und ein ringförmiges Stützelement 15 aufweist, das vom bzw. am Tragring 14 gehalten ist. Die Axialabstützung 13 ist mittels wenigstens einer Schweißverbindung 16 am Gehäuse 2 befestigt. Der erste Substratkörper 3 ist am Stützelement 15 axial abgestützt. Im Betrieb der Abgasnachbehandlungseinrichtung 1 kann die Durchströmung des ersten Substratkörpers 3 mit Abgas aufgrund des Durchströmungswiderstands des ersten Substratkörpers 3 in der Strömungsrichtung 7 orientierte Schubkräfte erzeugen, die den ersten Substratkörper 3 relativ zum Gehäuse 2 in der Strömungsrichtung 7 antreiben. Diese Axialkräfte können nun vom ersten Substratkörper 3 über das Stützelement 15 auf den Tragring 14 und von diesem auf das Gehäuse 2 übertragen werden.

In der Abgasnachbehandlungseinrichtung 1 können auch mehr als zwei Substratkörper 3, 4 im Gehäuse 2 angeordnet sein. Ferner ist denkbar, bei einer Ausführungsform, die im Gehäuse 2 zwei oder mehr Substratkörper 3, 4 enthält, zwei oder mehr als zwei Axialabstützungen 13 vorzusehen, um auch den zweiten Substratkörper 4, und insbesondere auch jeden weiteren Substratkörper, axial am Gehäuse 2 abzustützen.

Zweckmäßig ist eine Ausführungsform, bei der jedem Substratkörper 3, 4 jeweils nur eine einzige Axialabstützung 13 zugeordnet ist, die beim jeweiligen Substratkörper 3, 4 an dessen Austrittsseite bzw. Abströmseite angeordnet ist. In den Fig. 1 bis 4 weist die Strömungsrichtung 7 nach links. Dementsprechend befindet sich auch die axiale Austrittsseite des jeweiligen Substratkörpers 3, 4 links und ist bei dem rechts dargestellten Substratkörper 3 mit 26 bezeichnet. Bevorzugt liegt der jeweilige Substratkörper 3, 4 an seiner austrittsseitigen Stirnseite 26 mit einer vorbestimmten Vorspannung an der zugehörigen Axialabstützung 13 an, also auch dann, wenn keine Durchströmung der Abgasnachbehandlungseinrichtung 1 erfolgt.

Der Tragring 14 besitzt in der Umfangsrichtung eine Unterbrechung 17, wodurch der Tragring 14 in der Radialrichtung eine gewisse Elastizität besitzt. Im Unterschied dazu ist das Stützelement 15 in der Umfangsrichtung vorzugsweise unterbrechungsfrei ausgestaltet. Beispielsweise ist das Stützelement 15 durch ein Drahtgestrick gebildet.

Der Tragring 14 besitzt in einem die Längsmittelachse 6 enthaltenden Querschnitt ein U-Profil 18, das einen radial außen liegenden Außenschenkel 19, einen radial innen liegenden Innenschenkel 20 und eine Basis 21 aufweist. Die Basis 21 verbindet den Außenschenkel 19 mit dem Innenschenkel 20. Außenschenkel 19 und Innenschenkel 20 bilden eine radiale Positionierung des Stützelements 15 am Tragring 14. Die Basis 21 bildet eine axiale Positionierung des Stützelements 15 am Tragring 14. Bei der hier gezeigten Ausführungsform steht der Außenschenkel 19 axial über den Innenschenkel 20 über. Hierdurch bildet der Außenschenkel 19 einen Fixierbereich 22 des Tragrings 13, über den der Tragring 13 am Gehäuse 2 befestigt ist. Insbesondere ist die jeweilige, vorgenannte Schweißstelle 16 an bzw. in diesem Fixierbereich 22 ausgebildet. An Fixierbereich 22 anschließend bildet das übrige U-Profil 18 einen Haltebereich 23 des Tragrings 14, der letztlich das Stützelement 15 hält bzw. am Tragring 14 festlegt.

Der Fixierbereich 22 ragt axial in einen Radialspalt 24 hinein, der radial zwischen dem Gehäuse 2 und dem ersten Substratkörper 3 ausgebildet ist. Im Bereich dieses Radialspalts 24 ist die jeweilige Schweißstelle 16 angeordnet. Die erste Lagermatte 8 besitzt einen der Axialabstützung 13 zugewandten axialen Rand 25. Dieser Rand 25 ist gegenüber einer der Axialabstützung 13 zugewandten axialen Stirnseite 26 des ersten Substratkörpers 3 axial versetzt angeordnet, derart, dass der Rand 25 der ersten Lagermatte 8 den vorgenannten Radialspalt 24 axial begrenzt.

Ferner ist das Gehäuse 2 insbesondere im Bereich der Axialabstützung 13 ungelocht. Die jeweilige Schweißverbindung 16 erstreckt sich somit durch das Gehäuse 2 hindurch bis in den Tragring 14 hinein.

Ein Verfahren zum Herstellen der hier vorgestellten Abgasnachbehandlungseinrichtung 1 charakterisiert sich durch folgende Schritte:
In einem in Fig. 1 gezeigten ersten Schritt des Verfahrens wird der erste Substratkörper 3 axial in das Gehäuse 2 eingeführt und mittels der ersten Lagermatte 8 im Gehäuse 2 gelagert. Das Einführen des ersten Substratkörpers 3 erfolgt dabei zweckmäßig in einer Einführrichtung 27, die in den Figuren durch einen Pfeil angedeutet ist und die der Strömungsrichtung 7 entgegen gerichtet ist. Das Einführen des ersten Substratkörpers 3 erfolgt derart, dass der erste Substratkörper 3 anschließend eine vorbestimmte Relativlage bezüglich des Gehäuses 2 besitzt.

Entsprechend Fig. 2 wird in einem zweiten Schritt des Verfahrens die Axialabstützung 13 in das Gehäuse 2 eingeführt, und zwar ebenfalls in der Einführrichtung 27. Ferner wird die Axialabstützung 13 im Gehäuse 2 axial so positioniert, dass sie über das Stützelement 15 eine vorbestimmte Axialkraft 28 auf den ersten Substratkörper 3 überträgt. Die Axialkraft 28 ist dabei durch einen Pfeil angedeutet. Demnach wird die Axialabstützung 13 zunächst soweit in das Gehäuse 2 eingeführt, bis das Stützelement 15 den ersten Substratkörper 3 an dessen Stirnseite 26 berührt. Ferner wird dann die Axialkraft 28 aufgebaut, wobei das Stützelement 15 elastisch komprimiert wird. Die Axialkraft 28 ist dabei kleiner als die axiale Haltekraft, mit der die erste Lagermatte 8 den ersten Substratkörper 3 im Gehäuse 2 axial positioniert.

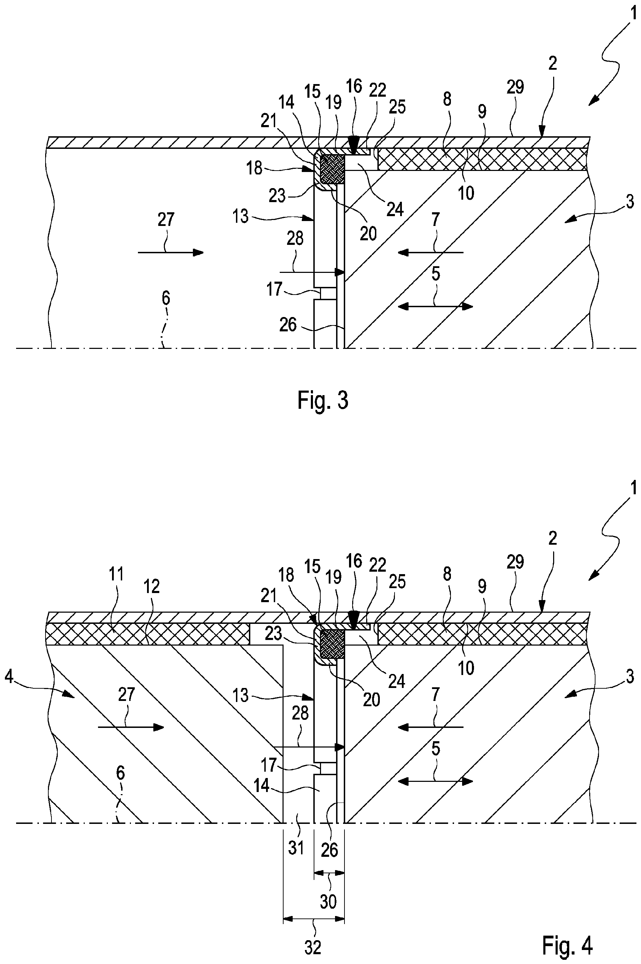

Gemäß Fig. 3 wird nun in einem dritten Schritt des Verfahrens die Axialabstützung 13 am Gehäuse 2 fixiert, und zwar in der axial vorgespannten Positionierung des zweiten Schritts. Hierzu wird der Tragring 14 mit dem Gehäuse 2 verschweißt. Hierbei wird die wenigstens eine Schweißverbindung 16 hergestellt. Die Schweißverbindung 16 befindet sich dabei am Außenschenkel 19 bzw. im Fixierbereich 22. Jedenfalls befindet sich die Schweißverbindung 16 in einem Bereich des Tragrings 14, der sich außerhalb des Stützelements 15 befindet. Das Verschweißen zum Fixieren der Axialabstützung 13 am Gehäuse 2 wird dabei von einer Außenseite 29 des Gehäuses 2 durchgeführt, so dass die jeweilige Schweißstelle 16 durch das Gehäuse 2 hindurch geführt ist. Das Verschweißen kann dabei mit einem Laser-Wobbel-Schweißverfahren realisiert werden. Die Schweißstellen 16 sind dann sich in der Umfangsrichtung erstreckende Schweißnähte, wobei mehrere derartige Schweißnähte in der Umfangsrichtung verteilt und zueinander beabstandet angeordnet sind. Ein derartiges Laser-Schweiß-Verfahren kann durch das Gehäuse 2 hindurch realisiert werden, so dass das Gehäuse 2 im Bereich der Schweißverbindung ungelocht sein kann.

Da der Tragring 14 bevorzugt in angedrücktem Zustand unter der Axialkraft 28 am Gehäuse 2 fixiert wird, liegt diese Axialkraft 28 auch nach dem Anbringen der Schweißverbindungen 16 vor.

Das Verschweißen des Tragring 14 am Gehäuse 2 kann ferner auch so realisiert werden, dass der Tragring 14 vor dem Verschweißen radial gegen das Gehäuse 2 angedrückt und in diesem angedrückten Zustand mit dem Gehäuse 2 verschweißt wird. Durch die Unterbrechung 17 besitzt der Tragring 14 in der Radialrichtung eine gewisse Elastizität, wodurch er besonders einfach radial gegen das Gehäuse 2 angedrückt werden kann.

Gemäß Fig. 4 kann nun in einem vierten Schritt des Verfahrens der zweite Substratkörper 4 axial in das Gehäuse 2 eingeführt und darin mittels der zweiten Lagermatte 11 gelagert werden. Auch der zweite Substratkörper 4 wird dabei in der Einführrichtung 27 in das Gehäuse 2 eingeführt. Dementsprechend werden die beiden Substratkörper 3, 4 und die Axialabstützung 13 durch dieselbe, hier nicht gezeigte Axialöffnung des Gehäuses 2 in das Gehäuse 2 eingeführt.

Wie sich nun Fig. 4 entnehmen lässt, ist eine axiale Abmessung 30 der Axialabstützung 13, welche die Axialabstützung 13 innerhalb eines axial zwischen den beiden Substratkörpern 3, 4 ausgebildeten Axialspalts 31 aufweist, kleiner als eine axiale Spaltbreite 32 dieses Axialspalts 31. Im Beispiel ist die Spaltbreite 32 etwa 50% größer als die axiale Abmessung 30 der Axialabstützung 13 innerhalb des Axialspalts 31.

## Patentansprüche

1. Verfahren zum Herstellen einer Abgasnachbehandlungseinrichtung (1), die in einem rohrförmigen Gehäuse (2) wenigstens einen keramischen Substratkörper (3, 4) zur Abgasnachbehandlung aufweist,
- bei dem ein erster Substratkörper (3) axial in das Gehäuse (2) eingeführt und mittels einer ersten Lagermatte (8) im Gehäuse (2) gelagert wird, wobei die erste Lagermatte (8) den ersten Substratkörper (3) in der Umfangsrichtung umhüllt und radial zwischen dem ersten Substratkörper (3) und dem Gehäuse (2) vorgespannt ist,
- bei dem eine Axialabstützung (13), die einen Tragring (14) und ein vom Tragring (14) gehaltenes, ringförmiges Stützelement (15) aufweist, axial in das Gehäuse (2) eingeführt und darin so positioniert wird, dass sie über das Stützelement (15) eine vorbestimmte Axialkraft (28) auf den ersten Substratkörper (3) überträgt,
- bei dem die Axialabstützung (13) bei dieser axial vorgespannten Positionierung am Gehäuse (2) fixiert wird, indem der Tragring (14) mit dem Gehäuse (2) verschweißt wird,
**dadurch gekennzeichnet,**
**dass** ein zweiter Substratkörper (4) axial in das Gehäuse (2) eingeführt und mittels einer zweiten Lagermatte (11) im Gehäuse (2) gelagert wird, wobei die zweite Lagermatte (11) den zweiten Substratkörper (4) in der Umfangsrichtung umhüllt und radial zwischen dem zweiten Substratkörper (4) und dem Gehäuse (2) vorgespannt ist, und wobei axial zwischen dem ersten Substratkörper (3) und dem zweiten Substratkörper (4) ein Axialspalt (31) ausgebildet wird, in dem der Tragring (14) das Stützelement (15) positioniert.

2. Verfahren nach Anspruch 1,
**dadurch gekennzeichnet,**
**dass** der Tragring (14) vor dem Verschweißen radial gegen das Gehäuse (2) angedrückt und in diesem angedrückten Zustand mit dem Gehäuse (2) verschweißt wird.

3. Verfahren nach Anspruch 2,
**dadurch gekennzeichnet,**
**dass** ein solcher Tragring (14) mit einer Unterbrechung (17) in der Umfangsrichtung verwendet wird.

4. Verfahren nach einem der Ansprüche 1 bis 3,
**dadurch gekennzeichnet,**
**dass** der Tragring (14) einen das Stützelement (15) haltenden Haltebereich (23) und einen zum Verschweißen mit dem Gehäuse (2) vorgesehenen Fixierbereich (22) aufweist, wobei der Fixierbereich (22) beim Positionieren der Axialabstützung (13) im Gehäuse (2) axial in einen Ringspalt (24) eingeführt wird, der radial zwischen dem Gehäuse (2) und dem ersten Substratkörper (3) ausgebildet ist, und in diesem Radialspalt (24) mit dem Gehäuse (2) verschweißt wird.

5. Verfahren nach Anspruch 4,
**dadurch gekennzeichnet,**
**dass** ein der Axialabstützung (13) zugewandter axialer Rand (25) der ersten Lagermatte (8) gegenüber einer der Axialabstützung (13) zugewandten axialen Stirnseite (26) des ersten Substratkörpers (3) axial versetzt angeordnet ist, so dass besagter Rand (25) den Radialspalt (24), in den der Fixierbereich (22) axial eingreift, axial begrenzt.

6. Verfahren nach einem der Ansprüche 1 bis 5,
**dadurch gekennzeichnet,**
**dass** das Verschweißen zum Fixieren der Axialabstützung (13) am Gehäuse (2) von einer Außenseite (29) des Gehäuses (2), radial durch das Gehäuse (2) hindurch durchgeführt wird.

7. Verfahren nach einem der Ansprüche 1 bis 6,
**dadurch gekennzeichnet,**
**dass** das Verschweißen als Laser-Wobbel-Schweißen durchgeführt wird.

8. Verfahren nach Anspruch 6 oder 7,
**dadurch gekennzeichnet,**
**dass** das Gehäuse (2) im Bereich der Axialabstützung (13) ungelocht ist und im ungelochten Zustand mit dem Tragring (14) verschweißt wird.

9. Verfahren nach einem der Ansprüche 1 bis 8,
**dadurch gekennzeichnet,**
**dass** als Stützelement (15) ein Drahtgestrick verwendet wird, das beim axialen Vorspannen der Axialabstützung (13) elastisch verformt wird.

10. Verfahren nach einem der Ansprüche 1 bis 9,
**dadurch gekennzeichnet,**
**dass** der Tragring (14) mit einem U-Profil (18) ausgestattet wird, das einen Außenschenkel (19) und einen Innenschenkel (20) zum radialen Positionieren des Stützelements (15) und eine den Außenschenkel (19) mit dem Innenschenkel (20) verbindende Basis (21) zum axialen Positionieren des Stützelements (15) aufweist, wobei der Außenschenkel (19) axial über den Innenschenkel (20) vorsteht und mit dem Gehäuse (2) verschweißt wird.

11. Verfahren nach einem der Ansprüche 1 bis 10,
**dadurch gekennzeichnet,**
**dass** eine axiale Abmessung (30) der Axialabstützung (13) innerhalb des Axialspalts (31) kleiner ist als eine axiale Spaltbreite (32) des Axialspalts (31), wobei die Spaltbreite (32) maximal 100%, vorzugsweise maximal 50%, größer ist als die axiale Abmessung (30) der Axialabstützung (13) innerhalb des Axialspalts (31).

12. Verfahren nach einem der Ansprüche 1 bis 11,
**dadurch gekennzeichnet,**
**dass** der erste Substratkörper (3), die Axialabstützung (13) und der zweite Substratkörper (4) durch dieselbe Axialöffnung des Gehäuses (2) in das Gehäuse (2) eingeführt werden.

13. Verfahren nach einem der Ansprüche 1 bis 12,
**dadurch gekennzeichnet,**
**dass** der jeweilige Substratkörper (3, 4) ausschließlich an seiner Austrittsseite (26) an einer solchen Axialabstützung (13) axial abgestützt wird.

14. Abgasnachbehandlungseinrichtung hergestellt mit einem Verfahren nach einem der Ansprüche 1 bis 13.

## Claims

1. A method for producing an exhaust gas retreatment device (1) which in a tubular housing (2) comprises at least one ceramic substrate body (3, 4) for exhaust gas retreatment,
- in which a first substrate body (3) is axially introduced into the housing (2) and mounted in the housing (2) by means of a first bearing mat (8), wherein the first bearing mat (8) encloses the first substrate body (3) in the circumferential direction and is radially preloaded between the first substrate body (3) and the housing (2),
- in which an axial support (13), which comprises a support ring (14) and an annular support element (15) held by the support ring (14) is axially introduced into the housing (2) and positioned therein so that it transmits a predetermined axial force (28) onto the first substrate body (3) via the support element (15),
- in which the axial support (13) is fixed on the housing (2) at this axially preloaded positioning in that the support ring (14) is welded to the housing (2),
**characterized in**
**that** a second substrate body (4) is axially introduced into the housing (2) and mounted in the housing (2) by means of a second bearing mat (11), wherein the second bearing mat (11) encloses the second substrate body (4) in the circumferential direction and is radially preloaded between the second substrate body (4) and the housing (2), and wherein axially between the first substrate body (3) and the second substrate body (4) an axial gap (31) is formed, in which the support ring (14) positions the support element (15).

2. The method according to Claim 1,
**characterized in**
**that** the support ring (14) prior to the welding is radially pressed against the housing (2) and in this pressed-on state is welded to the housing (2).

3. The method according to Claim 2,
**characterized in**
**that** such a support ring (14) having an interruption (17) in the circumferential direction is used.

4. The method according to any one of the Claims 1 to 3,
**characterized in**
**that** the support ring (14) comprises a holding region (23) holding the support element (15) and a fixing region (22) provided for welding to the housing (2), wherein the fixing region (22) on positioning the axial support (13) in the housing (2) is axially introduced into an annular gap (24) which is radially formed between the housing (2) and the first substrate body (3) and is welded to the housing (2) in this radial gap (24).

5. The method according to Claim 4,
**characterized in**
**that** an axial edge (25) of the first bearing mat (8) facing the axial support (13) is arranged axially offset with respect to an axial face end (26) of the first substrate body (3) facing the axial support (13), so that said edge (25) axially limits the radial gap (24) in which the fixing region (22) axially engages.

6. The method according to any one of the Claims 1 to 5,
**characterized in**
**that** the welding for fixing the axial support (13) on the housing (2) is carried out from an outside (29) of the housing (2) radially through the housing (2).

7. The method according to any one of the Claims 1 to 6,
**characterized in**
**that** the welding is performed as laser wobble welding.

8. The method according to Claim 6 or 7,
**characterized in**
**that** the housing (2) is unperforated in the region of the axial support (13) and in the unperforated state welded to the support ring (14).

9. The method according to any one of the Claims 1 to 8,
**characterized in**
**that** as support element (15) a wire mesh is used which during the axial preloading of the axial support (13) is elastically deformed.

10. The method according to any one of the Claims 1 to 9,
**characterized in**
**that** the support ring (14) is equipped with a U-profile (18) which comprises an outer leg (19) and an inner leg (20) for the radial positioning of the support element (15) and a base (21) connecting the outer leg (19) with the inner leg (20) for the axial positioning of the support element (15), wherein the outer leg (19) axially protrudes over the inner leg (20) and is welded to the housing (2).

11. The method according to any one of the Claims 1 to 10,
**characterized in**
**that** an axial dimension (30) of the axial support (13) within the axial gap (31) is smaller than an axial gap width (32) of the axial gap (31), wherein the gap width (32) is maximally 100%, preferentially maximally 50% greater than the axial dimension (30) of the axial support (13) within the axial gap (31).

12. The method according to any one of the Claims 1 to 11,
**characterized in**
**that** the first substrate body (3), the axial support (13) and the second substrate body (4) are introduced into the housing (2) through the same axial opening of the housing (2).

13. The method according to any one of the Claims 1 to 12,
**characterized in**
**that** the respective substrate body (3, 4) is exclusively axially supported on such an axial support (13) on its outlet side (26).

14. An exhaust gas retreatment device produced with a method according to any one of the Claims 1 to 13.

## Revendications

1. Procédé de fabrication d'un dispositif de post-traitement de gaz d'échappement (1), qui présente dans un boîtier tubulaire (2) au moins un corps de substrat céramique (3, 4) pour le post-traitement de gaz d'échappement,
- dans lequel un premier corps de substrat (3) est introduit axialement dans le boîtier (2) et logé dans le boîtier (2) au moyen d'un premier treillis de stock (8), dans lequel le premier treillis de stock (8) enveloppe le premier corps de substrat (3) dans la direction circonférentielle et est précontraint radialement entre le premier corps de substrat (3) et le boîtier (2),
- dans lequel un support axial (13), qui présente un anneau porteur (14) et un élément de support (15) annulaire maintenu par l'anneau porteur (14), est introduit axialement dans le boîtier (2) et y est positionné de telle manière qu'il transmet une force axiale prédéterminée (28) au premier corps de substrat (3) par le biais de l'élément de support (15),
- dans lequel le support axial (13) est fixé dans ce positionnement axialement précontraint sur le boîtier (2), par le fait que l'anneau porteur (14) est soudé avec le boîtier (2),
**caractérisé en ce**
**qu'**un deuxième corps de substrat (4) est introduit axialement dans le boîtier (2) et logé dans le boîtier (2) au moyen d'un deuxième treillis de stock (11), dans lequel le deuxième treillis de stock (11) enveloppe le deuxième corps de substrat (4) dans la direction circonférentielle et est précontraint radialement entre le deuxième corps de substrat (4) et le boîtier (2), et dans lequel une fente axiale (31) est formée entre le premier corps de substrat (3) et le deuxième corps de substrat (4), dans lequel l'anneau porteur (14) positionne l'élément de support (15).

2. Procédé selon la revendication 1,
**caractérisé en ce**
**que** l'anneau porteur (14) est appliqué radialement contre le boîtier (2) avant le soudage et est soudé dans cet état appliqué avec le boîtier (2).

3. Procédé selon la revendication 2,
**caractérisé en ce**
**qu'**un tel anneau porteur (14) avec une interruption (17) est utilisé dans la direction circonférentielle.

4. Procédé selon l'une quelconque des revendications 1 à 3,
**caractérisé en ce**
**que** l'anneau porteur (14) présente une zone de retenue (23) maintenant l'élément de support (15) et une zone de fixation (22) prévue pour le soudage avec le boîtier (2), dans lequel la zone de fixation (22) est introduite axialement dans une fente annulaire (24) lors du positionnement du support axial (13) dans le boîtier (2), qui est formée radialement entre le boîtier (2) et le premier corps de substrat (3), et est soudée avec le boîtier (2) dans cette fente radiale (24).

5. Procédé selon la revendication 4,
**caractérisé en ce**
**qu'**un bord axial (25) du premier treillis de stock (8) tourné vers le support axial (13) est agencé de manière axialement décalée par rapport à une face avant (26) axiale tournée vers le support axial (13) du premier corps de substrat (3), si bien que ledit bord (25) délimite axialement la fente radiale (24), dans laquelle la zone de fixation (22) vient axialement en prise.

6. Procédé selon l'une quelconque des revendications 1 à 5,
**caractérisé en ce**
**que** le soudage est réalisé radialement à travers le boîtier (2) pour fixer le support axial (13) sur le boîtier (2) d'un côté extérieur (29) du boîtier (2).

7. Procédé selon l'une quelconque des revendications 1 à 6,
**caractérisé en ce**
**que** le soudage est réalisé sous forme de soudage oscillant au laser.

8. Procédé selon la revendication 6 ou 7,
**caractérisé en ce**
**que** le boîtier (2) est non perforé au niveau du support axial (13) et est soudé à l'état non perforé avec l'anneau porteur (14).

9. Procédé selon l'une quelconque des revendications 1 à 8,
**caractérisé en ce**
**qu'**un grillage métallique, qui est déformé élastiquement lors de la précontrainte axiale du support axial (13), est utilisé comme élément de support (15).

10. Procédé selon l'une quelconque des revendications 1 à 9,
**caractérisé en ce**
**que** l'anneau porteur (14) est doté d'un profil en U (18), qui présente une branche extérieure (19) et une branche intérieure (20) pour le positionnement radial de l'élément de support (15) et une base (21) reliant la branche extérieure (19) à la branche intérieure (20) pour le positionnement axial de l'élément de support (15), dans lequel la branche extérieure (19) fait axialement saillie de la branche intérieure (20) et est soudée avec le boîtier (2).

11. Procédé selon l'une quelconque des revendications 1 à 10,
**caractérisé en ce**
**qu'**une dimension axiale (30) du support axial (13) à l'intérieur de la fente axiale (31) est plus petite qu'une largeur de fente axiale (32) de la fente axiale (31), dans lequel la largeur de fente (32) est plus grande au maximum de 100 %, de préférence au maximum de 50 %, que la dimension axiale (30) du support axial (13) à l'intérieur de la fente axiale (31).

12. Procédé selon l'une quelconque des revendications 1 à 11,
**caractérisé en ce**
**que** le premier corps de substrat (3), le support axial (13) et le deuxième corps de substrat (4) sont introduits dans le boîtier (2) par la même ouverture axiale du boîtier (2).

13. Procédé selon l'une quelconque des revendications 1 à 12,
**caractérisé en ce**
**que** le corps de substrat respectif (3, 4) est supporté axialement exclusivement au niveau de son côté de sortie (26) au niveau d'un tel support axial (13).

14. Dispositif de post-traitement de gaz d'échappement fabriqué avec un procédé selon l'une quelconque des revendications 1 à 13.
